# EUROPEAN PATENT APPLICATION

(11) **EP 1 416 018 A1**
(43) Date of publication of application: **06.05.2004**
(21) Application number: 02405930.5
(22) Date of filing: 31.10.2002
(51) Int. Cl.: C09B 67/22, C09B 7/00, C08K 5/46

(54) **Pigment formulations and processes for their preparation**

(71) Applicant: CLARIANT INTERNATIONAL LTD., 4132 Muttenz (CH)
(72) Inventor: The designation of the inventor has not yet been filed

(57) **Abstract**

The present invention relates to a pigment formulation which comprises at least one organic pigment selected from C.I. Pigment Red 279 or C.I. Pigment Orange 80 (both thiazine indigo pigments) and at least one pigment-dispersing agent. The invention further relates to a process for preparing said formulation as well as to a method of pigmenting high molecular weight organic material of natural or synthetic origin with said formulation.

## Description

The present invention relates to novel pigment formulations having improved coloristic and rheological properties, to a process for their preparation and to their use for pigmenting high molecular weight materials.

Upon mixing and dispersing a pigment in a vehicle such as paint, gravure ink or offset ink, it is generally difficult to stably disperse the pigment in the vehicle. Fine particles of the pigment, which have once been dispersed in the vehicle, tend to floculate in the vehicle. This leads to an increase in the viscosity of the vehicle with the pigment dispersed therein. Further, a reduction in the coloring power of an ink or paint making use of the vehicle with the pigment dispersed therein and a reduction in the gloss of a coating on the ink or paint can be observed.

Thiazine-indigo pigments are a well known class of pigments. Their preparation is for example described in the published patent application WO 98/32800. Two pigments of this new class of pigments are of particular interest: C.I. Pigment Red 279 of formula (I) and C.I. Pigment Orange 80 of formula (II):

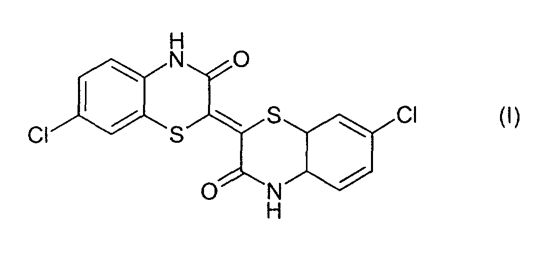

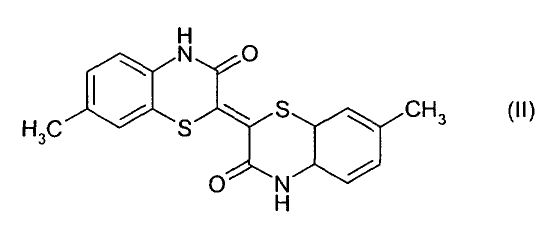

These two particular pigments provide very interesting properties, like very high opacity and very bright coloration in paint applications. Nevertheless there is a need for improving the rheological properties of these two particular thiazine-indigo pigments.

Generally, pigment formulations are combinations or mixtures of pigments with pigment-dispersing agents. Pigment-dispersing agents are added to pigments to facilitate dispersion in the application media, in particular in paints or coatings, with the intention to improve the rheological and coloristic properties of the pigment formulations.

In US 5,958,129 pigment formulations comprising a pigment of the perylene, perinone, quinacridone, azo, benzimidazolone, anthraquinone or anthranone type in combination with a structurally analogous pigment-dispersing agent are disclosed (see Col.1, 1. 8-16).

The addition of structurally analogous pigment-dispersing agents allows to reduce or to avoid floculation and to maintain a low viscosity of the pigment formulation even at high pigment concentrations. However, as the pigment-dispersing agent is selected due to structural analogy to the pigment, such dispersing agent is not universally applicable for structurally different pigments. The selection of pigment-dispersing agents for improving the rheological and coloristic properties of mixtures of organic pigments is thereby even more difficult.

Therefore the object of the invention is to provide pigment formulations which overcome the above described disadvantages of the prior art in respect of coloristic properties, rheology and universal applicability.

It has been found that the object is surprisingly achieved by pigment formulations which, in addition to the base pigment, C.I. Pigment Red 279 or C.I. Pigment Orange 80, comprise one of the dirpersants of formula (III) or (IV) as defined below.
In contrast to the general approach known in the art, these two dispersant have a completly different structure compared to the thiazine-indigo pigments C.I. Pigment Red 279 and C.I. Pigment Orange 80.

The invention therefore relates to pigment formulations comprising
a) at least one organic pigment selected from C.I. Pigment Red 279 of formula (I) or C.I. Pigment Orange 80 of formula (II) and
b) at least one pigment-dispersing agent selected from pigment dispersing agents of formula (III) or formula (IV).

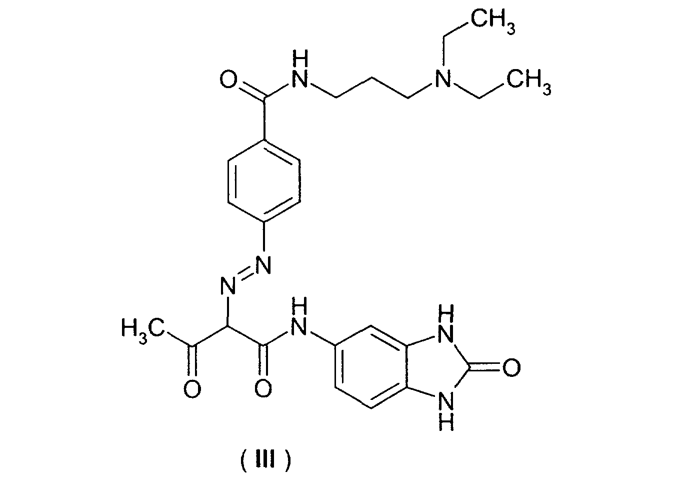

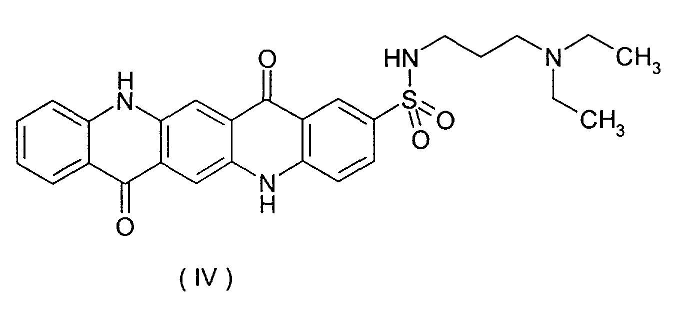

The amount of pigment-dispersing agents (b) in the pigment formulations according to the invention is not limited, as long as the required pigment quality is not adversely affected. In general a content of 0.5 to 20% by weight, preferably of 1 to 10% by weight, of pigment-dispersing agent, based on the total weight of the pigment formulation, is appropriate.

In addition to pigment (a) and pigment-dispersing agent (b), the pigment formulations according to the invention may also comprise further components, such as, for example, surface-active agents, resins, defoamers, anti-dusting agents, extenders or other customary additives.

Pigment formulations according to the present invention therefore preferably comprise
a) 99.5 to 80% by weight of at least one organic pigment selected from C.I. Pigment Red 279 of formula (I) or C.I. Pigment Orange 80 of formula (II),
b) 0.5 to 20% by weight, preferably 1 to 10% by weight, of at least one compound of the formula (III) or (IV),
c) 0 to 10% by weight of surface-active agents and
d) 0 to 10% by weight of customary additives.
The per centages are by weight and are based on the total weight of the formulation.

Possible surface-active agents are customary anionic, cationic or nonionic surfactants, for example anionic substances, such as fatty acid taurides, fatty acid N-methyltaurides, fatty acid isothionates, alkylbenzenesulfonates, alkylnaphthylenesulfonates, alkylphenol polyglycol ether-sulfates and fatty alcohol polyglycol ether-sulfates; fatty acids, for example palmitic, stearic and oleic acid; soaps, for example alkali metal salts of fatty acids, naphthenic acids and resin acids, for example abietic acid, and alkali-soluble resins, for example colophony-modified maleate resins; cationic substances, such as quaternary ammonium salts, fatty amine oxyethylates, fatty amine polyglycol ethers and fatty amines; and nonionic substances, such as fatty alcohol polyglycol ethers, fatty alcohol polyglycol esters and alkylphenolpolyglycol ethers.

Examples of possible customary additives are defoamers, extenders, fillers, standardizing agents, preservatives, drying retardants and foam-reducing agents.

The pigment formulations according to the invention can be both, mixtures of one or more organic pigments with in each case one pigment- dispersing agent, and mixtures of one organic pigment with one or more pigment- dispersing agents.
The pigment formulations according to the invention are in general free-flowing powders or granules.

The invention further relates to a process for the preparation of a pigment formulation according to the invention, which comprises adding the pigment-dispersing agent to the organic pigment at any point of time during the entire preparation process.

The preparation process of an organic pigment generally comprises the following steps : pigment synthesis, fine division, finishing, and isolation. The resulting product is either a press-cake or a dry powder.
The pigment-dispersing agents can be added before or during the pigment synthesis or before or during a fine division process or before or during a solvent finishing. In all these steps temperatures of from 0 to 200°C may occur. The pigment-dispersing agent can of course also be added in part portions at different steps of the process.

The essential step of the preparation process of an organic pigment is the (chemical) pigment synthesis. All further steps are optional and are only required if the resulting product of the previous step is to be improved in its (physical) properties.

Typical fine division methods are for example grinding or reprecipitation. Addition of dispersing agent in the fine division step is carried out, for example, in the course of dry grinding of the crude pigment, with or without additional grinding auxiliaries, on a roll or vibratory mill, or in the course of wet grinding of the crude pigment in an aqueous, aqueous-organic or organic grinding medium, for example on a bead mill.

A typical finishing method is the so called solvent treatment or solvent finishing. The dispersing agent is therefore added in an aqueous, aqueous-alkaline, aqueous-organic or organic medium.
The pigment-dispersing agents can also be added to and incorporated into the water-moist pigment press-cake before drying, in which case the pigment-dispersing agent itself can also be in the form of a press-cake.
It is furthermore possible to carry out dry mixing of pulverulent pigment-dispersing agents with the pigment powder.

The pigment-dispersing agents used according to the invention are suitable for both, the use in solvent-containing and in aqueous systems.

The pigment formulations according to the present invention provide for outstanding coloristic and rheological properties, in particular for high floculation stability, easy dispersibility, high gloss and a high tinctorial strength. The pigment formulations prepared according to the invention can be employed for pigmenting (coloring) high molecular weight organic materials of natural or synthetic origin.

Examples of high molecular weight organic materials which can be pigmented with the pigment formulations mentioned are cellulose ethers and esters, such as ethylcellulose, nitrocellulose, cellulose acetate or cellulose butyrate, naturally occurring resins or synthetic resins, such as addition polymerization resins or condensation resins, for example aminoplasts, in particular urea- and melamine- formaldehyde resins, alkyd resins, acrylic resins, phenoplasts, polycarbonates, polyolefins, such as polystyrene, polyvinyl chloride, polyethylene and polypropylene, polyacrylonitrile, polyacrylic acid esters, polyamides, polyurethanes or polyesters, rubber, casein, silicone and silicone resins, individually or in mixtures.

The pigment formulations according to the invention are applicable to high molecular weight organic materials no matter if they are in the form of plastic compositions or melts or in the form of spinning solutions, coatings, paints or printing inks. Depending on the intended use, it proves advantageous to use the pigment formulations obtained according to the invention as a blend or in the form of preparations or dispersions. The pigment formulations according to the invention are employed in an amount of preferably 0.1 to 10% by weight, based on the high molecular weight organic material to be pigmented.

In a further aspect of the invention it is also possible to add the pigment-dispersing agent to the pigment, or vice versa, directly in the use medium. The invention therefore also relates to a pigment preparation essentially comprising said organic pigment, said pigment- dispersing agent, said high molecular weight organic material and, if appropriate, a surface-active agent and/or further customary additives. The total amount of organic pigment plus pigment-dispersing agent is preferably 1 to 10% by weight, based on the total weight of the pigment preparation.

### Examples

In the following examples four pigment formulations according to the invention and two pigment formulations without dispersing-agent were prepared.
To evaluate the properties of the pigment formulations according to the invention, an aromatic-containing alkyd melamine resin coating (AM) based on a medium-oil alkyd resin and a butanol-etherified melamine resin was selected out of the large number of known coatings.

Gloss measurements were made on cast films at an angle of 20° in accordance with DIN 67530 (ASTMD 523) with the "multigloss" gloss meter from Byk-Mallinckrodt.
The gloss is considered the appropriate property to determine stability to floculation, as floculation reduces gloss. High gloss is therefore a valid indication for no or little floculation.

The parts are parts by weight and the percentages are percentages by weight of the substances thus described.

The following formulations were prepared:

### Formulation 1

A pigment formulation is obtained by mechanical mixing of 243.75 parts of C.I. Pigment Red 279, of formula (I), with 6.25 parts of the pigment-dispersing agent of formula (III).

### Formulation 2

A pigment formulation is obtained by mechanical mixing of 48.75 parts of C.I. Pigment Red 279, of formula ( I ), with 1.25 parts of the pigment-dispersing agent of formula (IV).

### Formulation 3

A pigment formulation is obtained by mechanical mixing of 49.5 parts of C.I. Pigment Orange 80, of formula (II), with 0.5 parts of the pigment-dispersing agent of formula (III).

### Formulation 4

A pigment formulation is obtained by mechanical mixing of 48.75 parts of C.I. Pigment Orange 80, of formula (II), with 1.25 parts of the pigment-dispersing agent of formula (III).

### AM coatings prepared with formulations 1-4

AM coatings of the formulations 1-4, were prepared (either drawn or poured) and the gloss (as an indication for flocculation stability) of each was evaluated in comparaison to the basic pigment.

| | **Gloss drawn** | **Gloss poured** |
|---|---|---|
| **Formulation 1** | 85 | 82 |
| **Formulation 2** | 71 | 60 |
| **P.R. 279 only** | 75 | 25 |
| | | |

| | **Gloss drawn** | **Gloss poured** |
|---|---|---|
| **Formulation 3** | 79 | 50 |
| **Formulation 4** | 83 | 73 |
| **P.O. 80 only** | 73 | 22 |

These results clearly demonstrate the improvement of the rheological properties of AM paints when using pigment-dispersing agent of formula (III) or (IV) in pigment formulations comprising the thiazine-indigo pigments of formula (I) or (II).

## Claims

1. A pigment formulation which comprises
a) at least one organic pigment selected from
C.I. Pigment Red 279 of formula (I) or 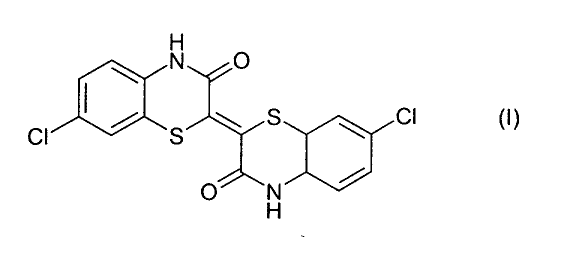 C.I. Pigment Orange 80 of formula (II) 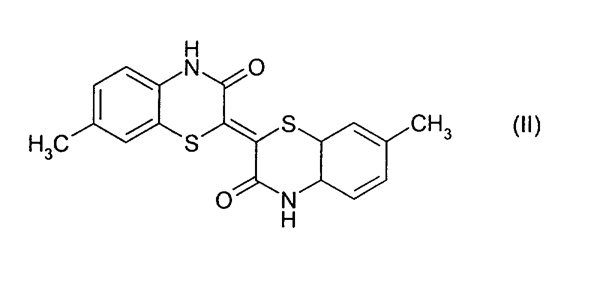 and
b) at least one pigment-dispersing agent selected from pigment-dispersing agents of formula (III) or of formula (IV).

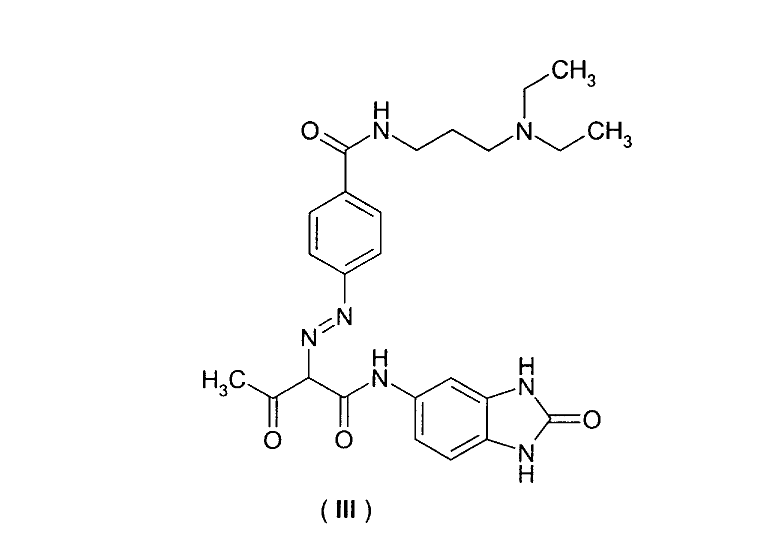

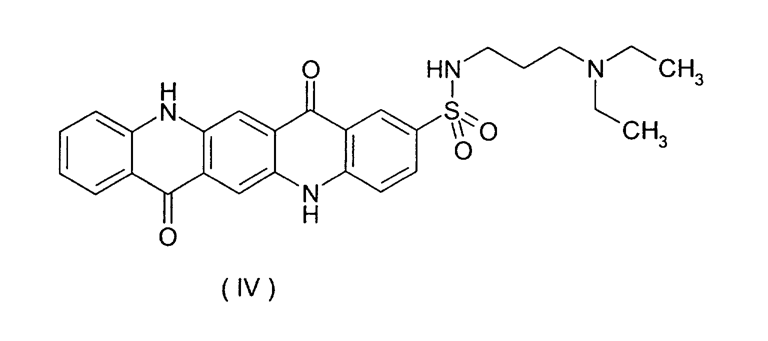

2. A pigment formulation according to claim 1, comprising
a) 99.5 to 80 % by weight of at least one organic pigment selected from
C.I. Pigment Red 279 of formula (I) or
C.I. Pigment Orange 80 of formula (II),
b) 0.5 to 20 % by weight of at least one compound of the formula (III) or (IV),
c) 0 to 10 % by weight of surface-active agents and
d) 0 to 10 % by weight of customary additives,
based on the total weight of the formulation.

3. A process for the preparation of a pigment formulations according to claim 1, comprising the steps of adding the pigment-dispersing agent of the formula (III) or (IV) to the organic pigment of formula (I) or (II) at any point of time during its entire preparation process.

4. The process of claim 3, wherein the pigment-dispersing agent of the formula (III) or (IV) is added before or during the pigment synthesis.

5. The process of claim 3, wherein the pigment-dispersing agent of the formula (III) or (IV) is added before or during a fine division process on the pigment.

6. The process of claim 3, wherein the pigment-dispersing agent of the formula (III) or (IV) is added before, during or after a solvent treatment of the pigment.

7. The process of claim 3 to 6, wherein the pigment-dispersing agent and the organic pigment are mixed in the form of a water-moist press-cake.

8. The process of claim 3 to 6, wherein the pigment-dispersing agent and the organic pigment are mixed in the form of dry powders.

9. A method of pigmenting high molecular weight organic material of natural or synthetic origin in the form of plastic formulations, melts, spinning solutions, coatings, paints, toners or printing inks, comprising the step of applying a pigment formulation as defined in claim 1 to said material.

10. A pigment preparation comprising
a) at least one organic pigment selected from C.I. Pigment Red 279 of formula (I) or C.I. Pigment Orange 80 of formula (II),
b) at least one pigment-dispersing agent selected from the pigment-dispersing agents of the formula (III) or (IV) and
c) a high molecular weight organic material of natural or synthetic origin in the form of plastic formulations, melts, spinning solutions, coatings, paints, toners or printing inks.
